# EUROPEAN PATENT APPLICATION

(11) **EP 2 628 537 A1**
(43) Date of publication of application: **21.08.2013**
(21) Application number: 13166155.5
(22) Date of filing: 02.11.2010
(51) Int. Cl.: B01J 23/656

(54) **SUPPORTED RHODIUM SYNTHESIS GAS CONVERSION CATALYST COMPOSITIONS**

(30) Priority: 02.11.2009 US 257152 P
(62) Divisional of application: 10776891.3
(71) Applicant: Dow Global Technologies LLC, Midland, MI 48674 (US)
(72) Inventor: BARDIN, Billy B., Lake Jackson, TX Texas 77566 (US); BARTON, David G., Midland, MI Michigan 48642 (US); CHOJECKI, Adam, B-9000 Gent (BE); CLARK, Howard W., Lake Jackson, TX Texas 77566 (US); FERRARI, Daniela, B-2050 Antwerp (BE); GULOTTY, Robert J., Jr., Midland, MI Michigan 48640 (US); LIU, Yu, Lake Jackson, TX Texas 77566 (US); MCADON, Mark H., Midland, MI Michigan 48642-3389 (US); MILLAR, Dean M., Midland, MI Michigan 48640 (US); RANE, Neelesh, NL-4532 KP Terneuzen (NL); TUINSTRA, Hendrik E., Midland, MI Michigan 48642-3229 (US)
(74) Representative: Hull, John Philip

(57) **Abstract**

A supported catalyst composition suitable for use in converting synthesis gas to alcohols comprises a catalytic metal, a catalyst promoter and a catalyst support.

## Description

This application is a non-provisional application claiming priority from the U.S. Provisional Patent Application No. 61/257,152, filed on November 2, 2009, entitled "SUPPORTED RHODIUM SYNTHESIS GAS CONVERSION CATALYST COMPOSITIONS," the teachings of which are incorporated by reference herein, as if reproduced in full hereinbelow.

This application relates generally to a supported catalyst composition that comprises a catalytic metal combination, especially one that includes rhodium and specified additional metals, and a catalyst support.

Chinese Patent publication (CN) 1179993 (Wang et al.) provides teachings relative to use of a rhodium-based catalyst to convert synthesis gas (syngas) to low carbon alcohols such as methanol, ethanol and propanol. The catalyst comprises rhodium (Rh), manganese (Mn), iron (Fe) and an alkali metal, either lithium (Li) or sodium (Na), on a silica (SiO₂) support.

CN 1088402 (Luo et al.) discusses syngas conversion catalysts that include Rh, at least one metal from each of four metal groups and a carrier or support. The groups are (a) titanium (Ti) and vanadium (V), (b) a rare earth element such as lanthanum (La), cerium (Ce), yttrium (Y), samarium (Sm) and neodymium (Nd), (c) a transition metal such as ruthenium (Ru), nickel (Ni), cobalt (Co) and palladium (Pd), and (d) Li, Na and potassium (Li).

CN 1074304 (Luo et al.) describes syngas conversion catalysts based upon Rh, V and a metal selected from Ru, Fe, iridium (Ir), molybdenum (Mo), Mn, K, Li and copper (Cu) on a SiO₂ support.

British Patent (GB) 2,151,616 (S. L. Jackson) discloses syngas conversion catalysts comprising a Group VIII metal such as Fe, Co, Ni, Ru, Rh, Pd, osmium (Os), Ir or platinum (Pt) on a tungsten oxide or molybdenum oxide support.

United States Patent (US) 4,096,164 (Ellgen et al.) teaches solid, supported catalysts comprising Rh in combination with W, Mo or both W and Mo, on a conventional support material such as SiO₂, alpha alumina (α-Al₂O₃), manganese oxide, magnesia, eta- alumina, gamma alumina and active carbon.

United States Patent Application Publication (US) 2006/00009537 (Iordache- Cazana et al.) presents teachings about a catalyst that may be a solid comprising (a) an active metal selected from Pd, Pt, Rh, Os and Ir, (b) a mixed metal component comprising one or more of (i) a metal A selected from La, Ce and Sm, and (ii) a metal B selected from Ti, Zr, and hafnium (Hf), and (c) a promoter selected from Li, Na, K, rubidium (Rb), cesium (Cs) and francium (Fr).

US 6,346,555 (Luo et al.) discloses a Rh-containing catalyst that comprises up to 10 wt% Rh, from 0.001 to 10 wt% Zr, from 0.01 to 5 wt% Ir, from 0.01 to 10 wt% of at least one of Cu, Co, Ni, Mn, Fe, Ru and Mo, and from 0.01 to 10 wt% of at least one alkali or alkaline earth metal selected from Li, Na, K, Rb, Mg and Ca, on an inert support. "Promoter Action of Rare Earth Oxides in Rhodium/Silica Catalysts for the Conversion of Syngas to Ethanol", Du et al., Applied Catalysis 35 (1987), pages 77-92, discusses supported Rh/SiO2 catalysts with Zr, Ti and iron oxide as additives.

Inoue et al., "Alcohol Synthesis from Syngas on Group VIII Metal Catalysts Promoted by Mo-Na2O", Applied Catalysis, 49 (1989), pages 213-217 evaluates performance of alumina supported Group VIII metal catalysts promoted by Mo and disodium oxide in synthesizing alcohols from syngas. Activity for alcohol synthesis at 255°C decreases in order as follows: Rh > Ir > Ru > Pd > Ni > Pt > Cu > Co > Re > Fe.

US 4,758,600 (Arimitsu et al.) discloses a catalyst composition that comprises A) catalyst component consisting of a) a Rh component, b) a Li component, and c) a component of at least one of Ir, Mn, scandium (Sc), Mg, Y, ytterbium (Yb), lutetium (Lu), V and Cr; and B) catalyst component supported on a separate carrier from said A) catalyst component, selected from a) an iron component and a component of at least one of Ir and Pd, b) a Pd component, c) an Fe component, a Mo component and a component of at least one of Ir and Pd, d) a Cu component and optionally a component of at least one of Zn and Cr.

Japanese Patent Publication (JP) 60-032735 relates to a catalyst system consisting of an Rh catalyst added with a cocatalyst comprising A) V and B) Fe and/or Ir.

JP 60-032736 discusses a catalyst system consisting of an Rh catalyst added with a cocatalyst comprising A) V, B) Fe, and C) one or more of Li, K, Sc, Y, Ce, Ti, Zr, niobium (Nb) and Hf.

US 4,980,380 (Wong et al.) discloses a catalyst that comprises Rh, Co, Mo and a combination of K and Rb.

US 4,210,597 (Huang) provides teachings about a solid catalyst that contains Rh, W and an alkali metal. European Patent Publication (EP) 0 030 110 (Ball et al.) relates to a supported mixture of a Rh component, a Zr component and one or more of Fe, Mn, Mo, W, Ru, chromium (Cr), uranium (U), thorium (Th), Ir and Pd.

Patent Cooperation Treaty Publication (WO) 2006/123150 (Atkins) refers to an Rh-Mn-Fe-M1-M2 catalyst supported on SiO₂ where M1 can be Li and/or Na and M2 can be Ru and/or Ir.

In some aspects, this invention is a supported catalyst composition, the composition comprising a catalytic metal combination and a catalyst support selected from a group consisting of a) rhodium (Rh), vanadium (V) and tungsten (W) with one or more of iron (Fe), lithium (Li), calcium (Ca), zinc (Zn), rhenium (Re), zirconium (Zr) and potassium (K) on a support selected from silica (SiO₂), magnesia (MgO) or a combination thereof; b) Rh, cerium (Ce) and manganese (Mn) with one or more of bismuth (Bi), magnesium (Mg) and sodium (Na) on an alumina (Al₂O₃) support; c) Rh, V, Zr, Zn, and, optionally, one or more of hafnium (Hf) and Re, on a SiO₂ support; d) Rh, iridium (Ir), V, and molybdenum (Mo) plus one or more of K, Zr and Re on an Al₂O₃ support; and (e) Rh, V, Mo, Re and K on an Al₂O₃ support. Alpha alumina (α-Al₂O₃) constitutes a preferred Al₂O₃ support.

The supported catalyst compositions have utility as catalysts to convert syngas to alcohols such as methanol, ethanol and propanol.

Catalyst preparation may occur via any known technique such as aqueous deposition-precipitation technology, non-aqueous incipient wetness technology or aqueous incipient wetness technology, with aqueous incipient wetness technology using aqueous solutions that contain metals of interest as inorganic salts being preferred.

Amounts of each catalytic metal in a catalytic metal combination and catalyst support vary depending upon choice of catalytic metals.

When the catalytic metal combination is Rh, V and W with one or more of Fe, Li, Ca, Zn, Re, Zr and K on a support selected from SiO₂, magnesia (MgO) or a combination thereof, the catalyst support is impregnated with Rh in an amount within a range of from 1 millimole per hectogram (mmol/hg) to 50 mmol/hg, with 5 mmol/hg -30 mmol/hg being preferred, V in an amount within a range of from 2 mmol/hg to 100 mmol/hg with 10 mmol/hg -60 mmol/hg being preferred, W in an amount within a range of from 0.5 mmol/hg to 80 mmol/hg, with 5 mmol/hg -30 mmol/hg being preferred, and the one or more of Fe, Li, Ca, Zn, Re, Zr and K in a total amount within a range of from 0.1 mmol/hg to 100 mmol/hg with 0.1 mmol/hg to 20 mmol/hg being preferred, each mmol/hg being based upon the weight of catalyst support prior to deposition of the catalytic metals and catalyst promoters. One may also use alumina as a support.

When the catalytic metal combination is Rh, Ce and Mn with one or more of Bi, Mg and Na on an Al₂O₃ support, the catalyst support is impregnated with Rh in an amount within a range of from 1.0 mmol/hg to 50 mmol/hg, with 15 mmol/hg - 35 mmol/hg being preferred, Ce in an amount within a range of from 0.5 mmol/hg to 100 mmol/hg with 1 mmol/hg - 10 mmol/hg being preferred, Mn in an amount within a range of from 0.5 mmol/hg to 100 mmol/hg with 2 mmol/hg - 15 mmol/hg being preferred, and, when present, Na in an amount within a range of from 1 mmol/hg to 130 mmol/hg, with 5 mmol/hg to 25 mmol/hg being preferred, Mg in an amount within a range of from 4 mmol/hg to 120 mmol/hg with 6 mmol/hg - 25 mmol/hg being preferred, and Bi in an amount within a range of from 1 mmol/hg to 25 mmol/hg with 2 mmol/hg - 10 mmol/hg being preferred, each mmol/hg being based upon the weight of the catalyst support prior to deposition of the catalytic metal and catalyst promoters.

When the catalytic metal combination is Rh, V, Zr, Zn and, optionally one or more of Hf and Re on a SiO₂ support, the catalyst support is impregnated with Rh in an amount within a range of from 1 mmol/hg 50 mmol/hg with 5-30 mmol/hg being preferred, V in an amount within a range of from 2 mmol/hg to 100 mmol/hg with 10-60 mmol/hg being preferred, Zr in an amount within a range of from 2 mmol/hg to 100 mmol/hg with 5-40 mmol/hg being preferred, Zn in an amount within a range of from 0.4 mmol/hg to 10 mmol/hg with 1-5 mmol/hg being preferred and, when present, Hf in an amount within a range of from 2 mmol/hg to 100 mmol/hg with 5-40 mmol/hg being preferred, and Re in an amount within a range of from 1 mmol/hg to 100 mmol/hg with 2 mmol/hg to 50 mmol/hg being preferred, each mmol/hg being based upon the weight of the catalyst support prior to deposition of the catalytic metals and catalyst promoters.

When the catalytic metal is a combination of Rh, Ir, Mo and at least one of V, K, Zr and Re on an Al₂O₃ support, the catalyst support is impregnated with Rh in an amount within a range of from 0.2 mmol/hg to 50 mmol/hg with 0.5-20 mmol/hg being preferred, Ir in an amount within a range of from 0.4 mmol/hg to 30 mmol/hg with 1-10 mmol/hg being preferred, Mo in an amount within a range of from 1.0 mmol/hg to 40 mmol/hg with 3-20 mmol/hg being preferred, and when part of the combination, V in an amount within a range of from 2 mmol/hg to 100 mmol/hg with 5 mmol/hg to 40 mmol/hg being preferred, K in an amount within a range of from 0.5 mmol/hg to 50 mmol/hg with 1- 20 mmol/hg being preferred, Zr in an amount within a range of from 2 mmol/hg to 40 mmol/hg with 5-20 mmol/hg being preferred, and Re in an amount within a range of from 1 mmol/hg to 40 mmol/hg with 4-20 mmol/hg being preferred, each mmol/hg being based upon the weight of the catalyst support prior to deposition of the catalytic metals and catalyst promoters.

When the catalytic metal combination is Rh, V, Mo, Re and K on an Al₂O₃ support, V in an amount within a range of from 2 to 100 mmol/hg with 5 mmol/hg - 40 mmol/hg being preferred, Rh in an amount within a range of from 1 mmol/hg to 50 mmol/hg with 1 mmol/hg - 30 mmol/hg being preferred, V in an amount within a range of from 2 mmol/hg to 100 mmol/hg, with 5 mmol/hg - 40 mmol/hg being preferred, Mo in an amount within a range of from 1 mmol/hg to 40 mmol/hg, with 3 mmol/hg - 20 mmol/hg being preferred, Re in an amount within a range of from 1 mmol/hg to 40 mmol/hg, with 4 mmol/hg - 20 mmol/hg being preferred, and K in an amount within a range of from 0.5 mmol/hg to 50 mmol/hg, with 1-20 mmol/hg being preferred. Each mmol/hg is based upon the weight of the catalyst support prior to deposition of the catalytic metals and catalyst promoters.

### Example (Ex) 1

Place 0.089 grams (g) of ammonium metavanadate (NH₄VO₃, formula weight (F.W.) 116.98 g) in a 20 milliliter (mL) beaker, add 2 mL of water to the beaker and heat beaker contents to 70 °C to dissolve the NH₄VO₃. Crush magnesia (MgO), sieve it to a 20 mesh (841 micrometers (µm) to 40 mesh (420 µm) powder, and transfer 5g to a ceramic dish. Add the beaker contents to the ceramic dish dropwise with stirring to disperse the solution onto the MgO particles. Dry ceramic dish contents at 120 °C for three hours (hrs) in an air oven. Dissolve 0.1005 g of ammonium metatungstate hydrate ((NH₄)₆H₂W₁₂O₄₀ xH₂O, F.W. 2956.30 g) and 0.049 g of lithium nitrate (LiNO₃, F.W. 68.95 g) in 2 mL of distilled water. Add the solution to the dried ceramic dish contents dropwise while stirring to disperse. Calcine the material to 450 °C using a 5 step drying procedure, 70 °C for 2 hrs, 120 °C for 2 hrs, 210 °C for 2 hrs, 350 °C for 2 hrs and 450 °C for 2 hrs.

Dissolve 0.375 g of rhodium chloride hydrate (RhCl₃· 3H₂O) in 2 mL of distilled water. Add the solution to the calcined material dropwise while stirring to disperse. Calcine the material to 450 °C using the 5 step drying procedure described above. The resulting catalyst composition ("Catalyst 1") is Rh 28.5, V 15.2, W 8.2, Li 14.2 // MgO, where the numbers give metals loadings in units of millimoles per 100 grams of support (mmol/hg support).

Load 1.5 g of Catalyst 1 in a ¼ inch (0.64 centimeter (cm)) diameter stainless steel tube reactor heated in a sand-bath. Pass a gaseous feedstream composed of hydrogen (H₂) through the catalyst at a flow rate of 200 mL/minute (mL/min) at ambient pressure and heat the catalyst to 330 °C with a ramp rate of 90 °C/hr and hold for 4 hrs. Cool the catalyst to 270 °C and pass a gaseous feedstream composed of 47.5 volume percent (vol%) H₂, 47.5 vol% carbon monoxide (CO) and 5 vol% nitrogen (N₂) through the catalyst at a flow rate of 300 mL/min and raise the pressure to 1500 psi (10.34 Megapascals (MPa)) using a pressure regulator on the reactor's outlet. Analyze effluent gas from the reactor via gas chromatography (GC) to determine product composition and amount of CO converted. Raise catalyst temperature to 300 °C, 320 °C, 340 °C and 360 °C at a rate of 60 °C per hour, holding catalyst temperature at each temperature for eight hrs to allow measurement of catalyst performance at a given temperature using GC analysis. Table 1 below summarizes operating conditions and GC measurements of catalyst performance at four temperatures.

**Table 1. Catalyst performance for Example 1.**

| Measured Parameter | Value | | | | Units |
|---|---|---|---|---|---|
| Temperature | 317 | 334 | 354 | 361 | (°C) |
| Space velocity | 1234 0 | 1240 0 | 12320 | 12360 | (hr-1) |
| CO₂ selectivity | 18 | 23 | 30 | 34 | (%) |
| Methanol selectivity | 20 | 18 | 14 | 8 | (%) |
| Ethanol selectivity | 25 | 22 | 23 | 20 | (%) |
| Propanol selectivity | 2.1 | 3.2 | 2.3 | 1.9 | (%) |
| Alcohol selectivity | 48 | 47 | 41 | 32 | (%) |
| Methane selectivity | 20.1 | 12.5 | 15.8 | 21.6 | (%) |
| Hydrocarbon | 23 | 15 | 19 | 25 | (%) |
| CO Conversion | 6.6 | 10.7 | 18.3 | 30.5 | (%) |
| Ethanol Productivity | 100.1 | 138.8 | 256.9 | 378.2 | (g gas/kg cat-hr) |
| Propanol | 7.3 | 18.2 | 22.7 | 30.6 | (g gas/kg cat-hr) |
| Alcohol Productivity | 223.7 | 340.2 | 506.0 | 631.2 | (g gas/kg cat-hr) |
| Methanol/Alcohol Ratio | 0.42 | 0.38 | 0.33 | 0.25 | |

Replicate Ex 1, but change the solution to a solution prepared by dissolving 0.77 g of RhCl₃ 3H₂O, 0.14 g of cerium nitrate (Ce(NO₃)₃ 3.6 H₂O, 0.12 g of manganese nitrate (Mn(NO₃)₂ 2.5 H₂O) and 0.11 g of sodium nitrate (NaNO₃). Change the support to an alpha alumina support. Increase drying time to four hours. Calcine by heating to 120 °C at a rate of 10 °C/min, hold at 120 °C for two hours then heat to 500 °C at a rate of 10 °C/min and hold at 500 °C for two hours. The resulting composition is Rh 29.2, Ce 3.6, Mn 5.6, Na 12.9 // Al₂O₃, where numbers indicate metals loadings in mmol/hg support.

### Ex 3

Replicate Ex 2, but change test conditions to those shown in Table 2.

**Table 2**

| Example | 2 | 3 |
|---|---|---|
| Pressure (psig/MPa) | 1500/10.34 | 1500/10.34 |
| GHSV (hr⁻¹) | 15000 | 24410 |
| Temperature (°C) | 350 | 370 |
| CO Conversion | 17.0 | 11.6 |
| Methanol Selectivity (%) | 2.4 | 2.3 |
| Ethanol Selectivity (%) | 17 | 19 |
| Propanol Selectivity (%) | 0.1 | 2.4 |
| Alcohol Selectivity (%) | 20 | 23 |
| Carbon dioxide Selectivity (%) | 23 | 24 |
| Methane Selectivity (%) | 30 | 34 |
| Hydrocarbon Selectivity (%) | 49 | 48 |
| Ethanol +Propanol Productivity (lb/cf/hr)/(kg/L | 12.8/0.2 05 | 18.3/0.293 |
| Methanol:Alcohol Ratio | 0.12 | 0.10 |

### Ex 4

Replicate Ex 2, but change the test conditions to those shown in Table 3.

Change the solution to a solution prepared by dissolving 0.77 g of RhCl₃ 3H₂O, 0.14 g of cerium nitrate (Ce(NO₃)₃ 3.6 H₂O, 0.12 g of manganese nitrate (Mn(NO₃)₂ 2.5 H₂O) and 0.32 g of magnesium nitrate (Mg(NO₃)₂ 6H₂O) and 0.23 g bismuth nitrate (Bi(NO₃)₃ 5 H₂O). Increase drying time to four hours. Calcine by heating to 120 °C at a rate of 10 °C/min, hold at 120 °C for two hours then heat to 500 °C at a rate of 10 °C/min and hold at 500 °C for two hours. The resulting composition is Rh 29.2, Ce 3.6, Mn 5.6, Bi 4.7, Mg 12.5 // Al₂O₃, where numbers indicate metals loadings in mmol/hg support.

### Ex 5

Replicate Ex 2 but change the test conditions to those shown in Table 3. The resulting composition is Rh 29.2, Ce 3.6, Mn 5.6, Na 12.9 // Al₂O₃, where numbers indicate metals loadings in mmol/hg support.

**Table 3. Pressure = 500 psig (3.45 MPa); GHSV = 4500 hr-1**

| Catalyst Example Number | Temp. (°C) | CC | EtOH (%) | ROH (%) | MeOH/ROH | HC (%) | CO₂ (%) |
|---|---|---|---|---|---|---|---|
| 4 | 280 | 2.7 | 24 | 47 | 0.41 | 3 | 9 |
| 5 | 280 | 6.4 | 33 | 44 | 0.08 | 3 | 17 |

### Ex 6

Prepare 50 g of Davison 57 silica gel sized to 20 mesh (841 µm) by 40 mesh (420 µm) by crushing and sieving. Wash with three volumes of a hot (90 °C) aqueous glycerine/oxalic acid solution (700 g oxalic acid, 1050 g glycerine and 1750 g water), followed by six volumes of distilled water. Dry the silica gel at 350 °C for 4 hours. Add 1.72 g of ammonium metavanadate to 60 mL of water in a 100 mL beaker, and stir beaker contents at a temperature of 65 °C to effect dissolution of the ammonium metavanadate. Dropwise add the ammonium metavanadate solution to the sized and washed silica gel while stirring the silica gel. Then dry overnight at 120 °C. Then impregnate with a solution of 1.25 g RhCl₃, 0.49 g LiNO₃, 1.005 g ammonium metatungstate and 60 mL of water. Heat the material in air to 350 °C using a 4 step drying procedure, 70 °C for 2 hrs, 120 °C for 2 hrs, 210 °C for 2 hrs, and 350 °C for 2 hrs. The resulting composition is Rh 9.5, V 29.5, W 8.2, Li 14.3 // SiO₂, where numbers indicate metals loadings in mmol/hg support. See Table 4 below for catalyst performance data (Temperature (Temp.), carbon conversion (CC), selectivity to ethanol (EtOH), selectivity to alcohol (ROH), ratio of methanol to alcohol (MeOH/ROH), selectivity to hydrocarbon (HC) and selectivity to CO₂ (CO2).

### Ex 7

Crush Davison 57 silica gel and sieve it to a particle size between 60 mesh (250 µm) and 100 mesh (149 µm). Impregnate 250 milligrams (mg) of the sized, crushed silica with 330 microliters (µL) of 14 mg of rhodium chloride, 6.2 mg of ammonium metavanadate, 7 mg of oxalic acid, and 13.6 mg of ammonium metatungstate dissolved in 289 µg of water. Vacuum dry the impregnated, crushed silica for two hours at 70 °C, then impregnate the dried, impregnated, crushed silica with 325 µL of a 0.18 wt% solution of calcium nitrate tetrahydrate in water. Repeat vacuum drying, then heat (in static air) to 120 °C at a rate of 10 °C/min, hold for two hours, then heat to 210 °C at a rate of 10 °C/min, hold for two hours, heat to 350 °C at a rate of 10 °C/min, hold for two hours, then cool to ambient temperature. The resulting composition is Rh 20.8, V 21, W 21, Ca 1 // SiO₂, where numbers indicate metals loadings in mmol/hg support. Evaluate catalyst performance as in Ex. 6 and summarize performance data in Table 4.

### Ex 8

Replicate Ex 7, but change the second impregnation to 325 µl solution of 0.22 wt% zinc nitrate tetrahydrate in water. The resulting composition is Rh 20.8, V 21, W 21, Zn 1 // SiO₂, where numbers indicate metals loadings in mmol/hg support.

### Ex 9

Replicate Ex 8, but change the first impregnation to a solution of 10.9 mg rhodium chloride, 1 mg of ammonium metavanadate, 1.15 mg oxalic acid, and 4.4 mg of ammonium metatungstate dissolved in 247 mg of water. The resulting composition is Rh 20.1, V 4.3, W 8.5, Zn 1 // SiO₂, where numbers indicate metals loadings in mmol/hg support.

### Ex 10

Replicate Ex 9, but change the first impregnation to a solution of 10.9 mg rhodium chloride, 7.2 mg of ammonium metavanadate, 8.1 mg oxalic acid and 7.9 mg of ammonium metatungstate dissolved in 216.4 mg of water. The resulting composition is Rh 21.2, V 32.2, W 16.1, Zn 1 // SiO₂, where numbers indicate metals loadings in mmol/hg support

### Ex 11

Replicate Ex 7, but carry out five impregnations with intermediate vacuum drying steps at 70 °C, as follows. Impregnate 250 milligrams (mg) of the sized, crushed silica with 330 µL of a solution of 9.5 mg of ammonium metavanadate, 9.4 mg oxalic acid dissolved in 312 mg water. Dry at 70 C. Impregnate with 5.4 mg of ammonium perrhenate and 7.75 mg rhodium nitrate dissolved in 318 mg of water. Dry at 70 C. Repeat this impregnation, and dry again at 70 C. Impregnate with 330 µL of a solution of 14.2 mg ammonium metatungstate, dissolved in 378 mg of water; dry at 70 C Impregnate with 325 µL of a 0.2 wt% potassium nitrate solution in water; dry at 70 C Heat in static air as in Ex 7. The resulting composition is Rh 21.4, V 32, W 16, Re 16, K 3.9 // SiO₂, where numbers indicate metals loadings in mmol/hg support.

### Ex 12

Replicate Ex 11, but substitute 4.9 mg of zirconyl nitrate hydrate for the ammonium perrhenate. The resulting composition is Rh 21.4, V 32, Zr 15.8, W 16, K 3.9 // SiO₂, where numbers indicate metals loadings in mmol/hg support.

### Ex 13

Replicate Ex 7, but change the support from silica to silica coated with magnesia. The MgO/SiO2 support is prepared as follows. Place 140 grams of magnesium nitrate hexahydrate (Mg(NO₃)₂ ·6H₂O) in a 500 milliliter (mL) beaker, add 248 mL of water to the beaker and stir to dissolve. Crush Davison 57 silica (SiO₂), sieve it to a 20 mesh (841 micrometers (µm) to 40 mesh (420 µm) powder, and transfer 200 g to a ceramic dish. Add the beaker contents to the ceramic dish dropwise with stirring to disperse the solution onto the SiO₂ particles. Calcine the material to 450 °C using a 5 step drying procedure, 70 °C for 2 hrs, 120 °C for 2 hrs, 210 °C for 2 hrs, 350 °C for 2 hrs and 450 °C for 2 hrs. In addition, change the first impregnation to a solution of 21.5 mg rhodium chloride, 4.75 mg of ammonium metavanadate, 6.4 mg oxalic acid, 2.9 mg ammonium metatungstate and 0.54 mg lithium nitrate dissolved in 295 mg of water and the second impregnation with 330 µL of a 2.4 wt % solution of zinc nitrate in water. The resulting composition is Rh 31.7, V 16, Zn 8.1, W 4.4, Li 3.1 // MgO/SiO₂, where numbers indicate metals loadings in mmol/hg support. Evaluate catalyst performance as in Ex. 6 and summarize performance data in Table 4.

**Table 4. Pressure = 500 psig (3.45 MPa); GHSV = 4500 hr-1**

| Catalyst Example Number | Temp. (°C) | CC | EtOH (%) | ROH (%) | MeOH/ ROH | HC (%) | CO₂ (%) |
|---|---|---|---|---|---|---|---|
| 6 | 270 | 2.1 | 26 | 64 | 0.54 | 21 | 8 |
| 6 | 280 | 2.2 | 26 | 53 | 0.43 | 30 | 13 |
| 6 | 300 | 2.0 | 29 | 47 | 0.32 | 36 | 10 |
| 7 | 270 | 6.8 | 13 | 65 | 0.78 | 27 | 7 |
| 8 | 270 | 6.2 | 12 | 66 | 0.79 | 26 | 7 |
| 9 | 270 | 4.4 | 20 | 55 | 0.61 | 33 | 10 |
| 10 | 270 | 7.0 | 16 | 55 | 0.67 | 25 | 17 |
| 11 | 270 | 9.7 | 21 | 44 | 0.43 | 37 | 16 |
| 12 | 270 | 7.3 | 24 | 42 | 0.19 | 41 | 8 |
| 13 | 300 | 5.1 | 16 | 28 | 0.31 | 50 | 10 |

### Ex 14

Crush Davison 57 silica gel and sieve it to a particle size between 60 mesh (250 µ m) and 100 mesh (149 Om). Impregnate 250 milligrams (mg) of the sized, crushed silica with 330 microliters (OL) of a solution made of 7 mg rhodium nitrate dissolved in 322.5 µl of water. Vacuum dry the impregnated, crushed silica for two hours at 70 °C, then replicate 11, but with three impregnations separated by intermediate vacuum drying steps at 70°C rather than four impregnations separated by intermediate vacuum drying steps at 70°C. Use 328 µL of a solution made of 90 µL ammonium metavanadate (4.75 wt%) and oxalic acid (5.6 wt%) dissolved in 455 µL water for a first impregnation, 317 µL of a solution made with 16 mg of ammonium perrhenate, 21µg rhodium nitrate, 15 mg of zirconyl(IV) nitrate hydrate and 871 mg of water for the second impregnation, and 325 µL of zinc nitrate hexahydrate (0.55 wt %) solution for the third impregnation. After the third impregnation, repeat vacuum drying, then heat (in static air) to 120 °C at a rate of 10 °C/min, hold for two hours, then heat to 210 °C at a rate of 10 °C/min, hold for two hours, heat to 350 °C at a rate of 10 °C/min, hold for two hours, then cool to ambient temperature. The resulting composition is Rh 10.4, Zr 8.8, V 8.8, Re 8.6, Zn 2.4 // SiO₂, where numbers indicate metals loadings in mmol/hg support. See Table 5 below for catalyst performance data (Temperature (Temp.), carbon conversion (CC), selectivity to ethanol (EtOH), selectivity to alcohol (ROH), ratio of methanol to alcohol (MeOH/ROH), selectivity to hydrocarbon (HC) and selectivity to CO₂ (CO₂).

### Ex 15

Replicate Ex 14, but substitute 7 mg of hafnium (IV) chloride for the ammonium perrhenate. The resulting composition is Rh 10.4, Zr 8.8, V 8.8, Hf 8.4, Zn 2.4 // SiO₂, where numbers indicate metals loadings in mmol/hg support.

### Ex 16

Replicate Ex 14 but change the amounts of ammonium metavanadate, using 328 µL of a solution made of 314 µL ammonium metavanadate (4.75 wt%) and oxalic acid solution (5.6 wt%) diluted in 436 µL water for the first impregnation. 317 µL of a solution made with 18.4 mg of hafnium chloride, 21µg rhodium nitrate, 13.6 mg of zirconyl(IV) nitrate hydrate and 871 mg of water for the second impregnation, and 325 µL of zinc nitrate solution (0.55 wt%) for the third impregnation The resulting composition is Rh 10.5, Zr 7.9, V 32, Hf 8.4, Zn 2.4 // SiO₂, where numbers indicate metals loadings in mmol/hg support.

### Ex 17

Replicate Ex 14, but eliminate the ammonium perrhenate and use 330 µL of a solution made of 9.1 mg ammonium metavanadate, 10.2 oxalic acid, 14.7mg rhodium nitrate and 295.5 mg of water for the first impregnation, 330 µ L of a solution made of 9.4 mg of zirconyl nitrate hydrate dissolved in 320 mg of water for the second impregnation and 325 µL of zinc nitrate hexahydrate (0.22 wt %) solution for the third impregnation. The resulting composition is Rh 20.4, Zr 15.3, V 30.8, Zn 1 // SiO₂.

**Table 5**

| Catalyst Example Number | Temp. (°C) | CC | EtOH (%) | ROH (%) | MeOH/ ROH | HC (%) | CO₂ (%) |
|---|---|---|---|---|---|---|---|
| 14 | 270 | 11.9 | 12 | 47 | 0.35 | 37 | 6 |
| 15 | 300 | 4.1 | 29 | 45 | 0.23 | 37 | 4 |
| 15 | 320 | 6.7 | 28 | 44 | 0.26 | 44 | 6 |
| 16 | 270 | 1.8 | 31 | 55 | 0.36 | 30 | 9 |
| 16 | 300 | 4.7 | 27 | 42 | 0.29 | 35 | 16 |
| 17 | 300 | 2.7 | 25 | 35 | 0.12 | 36 | 3 |

### Ex 18

Prepare five solutions as follows: S1 = 4 wt% ammonium metavanadate dissolved in a solution of oxalic acid (5.6 wt%) in water; S2 = 10 wt% ammonium heptamolybdate tetrahydrate in water; S3 = 10 wt% ammonium hexachloroiridate dissolved in a solution of ammonium hydroxide (28-33 wt%) in water; S4 = 10 wt% potassium nitrate in water; and S5 = 10 wt% rhodium(IIII)chloride hydrate in water.

In step one, impregnate 450 milligrams (mg) crushed and sieved (40 mesh (420 µ m) by 80 mesh (178 µm)) alpha-alumina with 264 µL of a solution made by combining 152 µL of S1 and 170 µL water. Heat the impregnated alumina to a temperature of 350°C at a rate of 5°C/min and hold it at that temperature overnight before allowing it to cool to room temperature. Repeat step one. Then impregnate the alumina with 263 µL of a solution made by combining 82.6 µL of S2, 74.8 µL of S3, 11.2 µL S4 and 152 µL water. Dry the impregnated alumina at 120°C overnight and allow it to cool to room temperature. Impregnate the dried, cooled, impregnated alumina with 264 µL of a solution made by combining 79.8 µL S5 and 243 µL water, then heat the impregnated alumina to 450°C at a rate of 5°C/min, hold at that temperature overnight and then allow to cool to room temperature. The resulting composition in mmol/hg support is Rh 5.8, V 19.6, Mo 8.9, Ir 3.1, K 3.8 // a-Al₂O₃.

Load 200 µL impregnated catalyst into a tube as in Example 1 and reduce the catalyst in situ at a temperature of 350° C by flowing hydrogen through the tube at a rate of 21 mL/min for three hours. Evaluate catalyst performance at 1500 psi (10/34 MPa) with a 1:1 molar ratio of H₂:CO and at temperatures as shown in Table 6 below.

### Ex 19

Replicate Ex 18 with changes to provide a catalyst with a nominal composition of Rh 9.7, V 9.8, Mo 15.6, Ir 1, K 3.8 // a-Al₂O₃.

### Ex 20

Replicate Ex 18 with changes to provide a catalyst with a nominal composition of Rh 9.7, V 9.8, Mo 15.6, Re 8.1, K 3.8 // a-Al₂O₃.

### Ex 21

Replicate Ex 18 with changes to provide a catalyst with a nominal composition of Rh 9.7, Zr 11, V 29.4, Mo 15.6, Re 8.1, Ir 5.2, K 3.8 // a-Al₂O₃.

### Ex 22

Replicate Ex 18 with changes to provide a catalyst with a nominal composition of Rh 9.7, Zr 11, V 9.8, Mo 15.6, Re 8.1, Ir 5.2, K 3.8 // a-Al₂O₃.

### Ex 23

Replicate Ex 18 with changes to provide a catalyst with a nominal composition of Rh 1.9, V 9.8, Mo 15.6, Ir 5.2, K 3.8 // α-Al₂O₃.

### Ex 24

Replicate Ex 18 with changes to provide a catalyst with a nominal composition of Rh 1.9, Zr 11, V 9.8, Mo 15.6, Re 8.1, Ir 5.2, K 3.8 // a-Al₂O₃.

### Comparative Example (CEx) 25

Prepare five solutions as follows: S1 = 4 wt% ammonium metavanadate dissolved in a solution of oxalic acid (5.6 wt%) in water; S2 = 10 wt% ammonium heptamolybdate tetrahydrate in water; S3 = 10 wt% ammonium hexachloroiridate dissolved in a solution of ammonium hydroxide (28-33 wt%) in water; S4 = 10 wt% potassium nitrate in water; and S5 = 8 wt% rhodium(III)chloride hydrate in water.

In step one, impregnate 249 milligrams (mg) crushed and sieved (40 mesh (420 µg m) by 80 mesh (178 µm)) silica gel with 325 µL of a solution made by combining 96.8 µL of S1 and 360 µL water. Dry the impregnated silica gel at 120°C overnight and allow it to cool to room temperature. Repeat step one. Then impregnate the silica gel with 325 µL of a solution made by combining 67.6 µL of S2, 61.2 µL of S3, 19.4 µL S4 and 438 µL water. Dry the impregnated silica gel at 120°C overnight and allow it to cool to room temperature. Impregnate the dried, cooled, impregnated silica gel with 328 µL of a solution made by combining 64.6 µL S5 and 393 µL water, then heat the impregnated silica gel to 450°C at a rate of 5°C/min, hold at that temperature overnight and then allow to cool to room temperature. The resulting composition in mmol/hg support is Rh 5.8, V 19.6, Mo 8.9, Ir 3.1, K 3.8 // SiO₂.

### CEx 26

Replicate CEx 25 with changes to provide a catalyst with a nominal composition of Rh 9.7, V 9.8, Mo 15.6, Ir 1, K 3.8 // SiO₂.

### CEx 27

Replicate CEx 25 with changes to provide a catalyst with a nominal composition of Rh 1.9, V 9.8, Mo 15.6, Ir 5.2, K 3.8 // SiO₂.

### Ex 28

Prepare four solutions as follows: S1 = 1.774 mg ammonium metavanadate and 1.753 mg oxalic acid dissolved in 458 mg water; S2 = 12.40 mg iron(III) nitrate nonahydrate and 20.65 mg rhodium nitrate dissolved in 891 mg water; S3 = 7.60 mg ammonium metatungstate and 37.3 mg nitric acid dissolved in 417 mg water; and S4 = 0.2 wt% potassium hydroxide in water.

Impregnate 251 milligrams (mg) crushed and sieved (40 mesh (420 µm) by 80 mesh (178 µm)) silica gel with 330 µL of S1. Vacuum dry the impregnated silica gel at 70 °C for two hours, and allow it to cool to room temperature. Impregnate the silica gel twice with 322 µg L of S2, and vacuum dry at 70 °C for two hours after each impregnation. Impregnate with 321 µL S3, and vacuum dry at 70°C for two hours. Impregnate with 326 µL S4, and vacuum dry at 70 °C for two hours. Heat in static air as in Example 7, then cool to ambient temperature. The resulting composition in mmol/hg support is Rh 20.4, Fe 8.6, V 4.3, W 8.6, K 3.9 // SiO₂.

**Table 6**

| Catalyst Example Number | Temp. (°C) | CC | EtOH (%) | ROH (%) | MeOH/ ROH | HC (%) | CO₂ (%) |
|---|---|---|---|---|---|---|---|
| 18 | 300 | 7.7 | 11 | 29 | 0.26 | 21 | 45 |
| 18 | 320 | 16. | 14 | 28 | 0.24 | 23 | 44 |
| 18 | 340 | 28. | 12 | 24 | 0.23 | 28 | 44 |
| 19 | 300 | 6.6 | 15 | 39 | 0.43 | 20 | 37 |
| 19 | 320 | 13. | 14 | 35 | 0.38 | 22 | 40 |
| 19 | 340 | 22. | 12 | 28 | 0.34 | 26 | 42 |
| 20 | 300 | 9.8 | 9.8 | 42 | 0.50 | 21 | 33 |
| 20 | 320 | 18. | 18.0 | 36 | 0.45 | 25 | 36 |
| 20 | 340 | 29. | 29.0 | 27 | 0.38 | 31 | 39 |
| 21 | 300 | 11. | 16 | 34 | 0.32 | 24 | 38 |
| 21 | 320 | 20. | 15 | 31 | 0.29 | 26 | 39 |
| 21 | 340 | 34. | 13 | 24 | 0.25 | 31 | 41 |
| 22 | 300 | 14. | 15 | 32 | 0.35 | 26 | 39 |
| 22 | 320 | 26. | 14 | 30 | 0.31 | 27 | 40 |
| 23 | 300 | 4.0 | 15 | 33 | 0.33 | 20 | 45 |
| 23 | 320 | 8.4 | 14 | 29 | 0.31 | 24 | 44 |
| 23 | 340 | 14. | 11 | 24 | 0.30 | 28 | 45 |
| 24 | 300 | 7.4 | 14 | 29 | 0.33 | 24 | 43 |
| 24 | 320 | 13. | 13 | 27 | 0.31 | 26 | 43 |
| 25 | 300 | 0.5 | -- | -- | -- | -- | -- |
| 25 | 320 | 1.2 | 19 | 46 | 0.51 | 25 | 25 |
| 25 | 340 | 2.2 | 18 | 40 | 0.46 | 28 | 28 |
| 26 | 300 | 0.8 | 21 | 72 | 0.64 | 20 | 4 |
| 26 | 320 | 1.9 | 17 | 57 | 0.63 | 23 | 18 |
| 26 | 340 | 3.7 | 15 | 48 | 0.59 | 25 | 24 |
| 27 | 300 | 0.5 | -- | -- | -- | -- | -- |
| 27 | 320 | 1.4 | 13 | 38 | 0.56 | 25 | 35 |
| 27 | 340 | 2.6 | 11 | 33 | 0.53 | 30 | 36 |
| 28 | 270 | 2.3 | 27 | 49 | 0.28 | 34 | 8 |
| 28 | 300 | 6.4 | 25 | 41 | 0.23 | 36 | 16 |

The data presented in Ex 1-28 demonstrate that supported catalyst compositions representative of the present invention convert syngas to mixed alcohols, some compositions being more effective than others. For example, the Rh-V-Mo-Ir- K/Al2O₃ catalysts of Ex 18-19 and 23 give conversions ranging from 8-16% at T=320 °C. The same compositions supported on silica (CEx 25-27) give substantially lower conversion (less than 4% conversion) even at T=340 °C.

The invention will be further described with reference to the following aspects.

Aspect 1. A supported catalyst composition, the composition comprising a catalytic metal combination and a catalyst support selected from a group consisting of a) rhodium, vanadium and tungsten with one or more of iron, lithium, calcium, zinc, rhenium, zirconiumand potassium on a support selected from silica, magnesia or a combination thereof; b) rhodium, cerium and manganese with one or more of bismuth, magnesium and sodium on an alumina support; c) rhodium, vanadium, zirconium, zinc, and, optionally, one or more of hafnium and rhenium, on a silica support; d) rhodium, iridium, vanadium and molybdenum plus one or more of potassium, zirconium and rhenium on an alumina support; and e) rhodium, vanadium, molybdenum, rhenium and potassium on an alumina support.

Aspect 2. The composition of aspect 1, wherein the alumina is alpha-alumina.

Aspect 3. The composition of aspect 1a), wherein the catalyst support is impregnated with rhodium in an amount within a range of from 1 millimole per hectogram (mmol/hg) to 50 mmol/hg, vanadium in an amount within a range of from 2 mmol/hg to 100 mmol/hg, tungsten in an amount within a range of from 0.5 mmol/hg to 80 mmol/hg, and the one or more of iron, lithium, calcium, zinc, rhenium, zirconium and potassium in a total amount within a range of from 0.1 mmol/hg to 100 mmol/hg each mmol/hg being based upon the weight of catalyst support prior to deposition of the catalytic metals and catalyst promoters.

Aspect 4. The composition of aspect 1b), wherein the catalyst support is impregnated with in an amount within a range of from 1.0 mmol/hg to 50 mmol/hg, cerium in an amount within a range of from 0.5 mmol/hg to 100 mmol/hg, manganese in an amount within a range of from 0.5 mmol/hg to 100 mmol/hg, and, when present, sodium in an amount within a range of from 1 mmol/hg to 130 mmol/hg, magnesium in an amount within a range of from 4 mmol/hg to 120 mmol/hg, and bismuth in an amount within a range of from 1 mmol/hg to 25 mmol/hg with 2 mmol/hg to 10 mmol/hg being preferred, each mmol/hg being based upon the weight of the catalyst support prior to deposition of the catalytic metal and catalyst promoters.

Aspect 5 The composition of aspect 1c), wherein the catalyst support is impregnated with rhodium in an amount within a range of from 1 mmol/hg 50 mmol/hg, vanadium in an amount within a range of from 2 mmol/hg to 100 mmol/hg, zirconium in an amount within a range of from 2 mmol/hg to 100 mmol/hg, zinc in an amount within a range of from 0.4 mmol/hg to 10 mmol/hg, and when present, hafnium in an amount within a range of from 2 mmol/hg to 100 mmol/hg and rhenium in an amount within a range of from 1 mmol/hg to 100 mmol/hg, each mmol/hg being based upon the weight of the catalyst support prior to deposition of the catalytic metals and catalyst promoters.

Aspect 6. The composition of aspect 1d), wherein the catalyst support is impregnated with rhodium in an amount within a range of from 0.2 mmol/hg to 50 mmol/hg, iridium in an amount within a range of from 0.4 mmol/hg to 30 mmol/hg, molybdenum in an amount within a range of from 1 mmol/hg to 40 mmol/hg, and when part of the combination, vanadium in an amount within a range of from 2 mmol/hg to 100 mmol/hg, potassium in an amount within a range of from 0.5 mmol/hg to 50 mmol/hg, zirconium in an amount within a range of from 2 mmol/hg to 40 mmol/hg, and rhenium in an amount within a range of from 1 mmol/hg to 40 mmol/hg, each mmol/hg being based upon the weight of the catalyst support prior to deposition of the catalytic metals and catalyst promoters.

Aspect 7. The composition of aspect 1e), wherein the catalyst support is impregnated with rhodium in an amount within a range of from 1 mmol/hg to 50 mmol/hg, vanadium in an amount within a range of from 2 mmol/hg to 100 mmol/hg, molybdenum in an amount within a range of from 1 mmol/hg to 40 mmol/hg, rhenium in an amount within a range of from 1 mmol/hg to 40 mmol/hg, and potassium in an amount within a range of from 0.5 mmol/hg to 50 mmol/hg, each mmol/hg is based upon catalyst support.

## Claims

1. A supported catalyst composition, the composition comprising a catalytic metal combination consisting of rhodium, vanadium, molybdenum, rhenium and potassium on an alumina support.

2. The composition of Claim 1, wherein the alumina is alpha-alumina.

3. The composition of Claim 1, wherein the catalyst support is impregnated with rhodium in an amount within a range of from 1 mmol/hg to 50 mmol/hg, vanadium in an amount within a range of from 2 mmol/hg to 100 mmol/hg, molybdenum in an amount within a range of from 1 mmol/hg to 40 mmol/hg, rhenium in an amount within a range of from 1 mmol/hg to 40 mmol/hg, and potassium in an amount within a range of from 0.5 mmol/hg to 50 mmol/hg, each mmol/hg is based upon the weight of the catalyst support prior to deposition of the catalytic metals and catalyst promoters.
